# EUROPEAN PATENT SPECIFICATION

(11) **EP 4 586 368 B1**
(45) Date of publication and mention of the grant of the patent: **09.12.2026**
(21) Application number: 24845973.7
(22) Date of filing: 22.07.2024
(51) Int. Cl.: H01M 10/6551, H01M 10/613, H01M 10/6556, H01M 50/211, H01M 50/502, H01M 50/507

(54) **BATTERY CELL ASSEMBLY AND BATTERY PACK INCLUDING SAME**
BATTERIEZELLENANORDNUNG UND BATTERIEPACK DAMIT
ENSEMBLE ÉLÉMENT DE BATTERIE ET BLOC-BATTERIE LE COMPRENANT

(30) Priority: 24.07.2023 KR 20230095852
(43) Date of publication of application: 16.07.2025
(73) Proprietor: LG Energy Solution, Ltd., Seoul 07335 (KR)
(72) Inventor: KIM, Jae Wook, Daejeon 34122 (KR); KIM, Gwan Woo, Daejeon 34122 (KR); JANG, Sung Hwan, Daejeon 34122 (KR)
(74) Representative: BCKIP Part mbB
(86) International application number: PCT/KR2024/010529
(87) International publication number: WO 2025/023671

(56) References cited:
- WO-A1-2023/058956
- KR-A- 20170 095 052
- KR-A- 20200 127 167
- KR-A- 20230 046 394
- KR-A- 20230 106 219
- KR-A- 20230 106 219
- US-A1- 2019 334 134
- US-A1- 2020 220 128
- US-A1- 20230 060 247
- US-A1- 20230 223 629

## Description

### [Technical Field of the Invention]

The present invention relates to a battery cell assembly, and a battery pack including the same.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. As secondary batteries are applied to the field of mobility such as battery electric vehicles (BEVs), research is being conducted to reduce damage to secondary batteries due to generated heat to increase the reliability of the secondary batteries, as well as to increase the battery capacity and energy density of secondary batteries.

US 2023/0060247 A1 discloses a battery including a battery cell stack disposed within a housing such that a gap exists between the battery cell stack and an inner surface of the housing. The battery cell stack includes a plurality of battery cells that each include a positive electrode tab and a negative electrode tab electrically coupled to an electrode assembly and extending from the electrode assembly outside of a case. A filler material fills the gap and provides a thermally conductive pathway between the positive electrode tabs and/or the negative electrode tabs of the plurality of battery cells and the inner surface of the housing. The filler material includes a thermally conductive particulate component distributed throughout a polymeric matrix component.

### [Disclosure of the Invention]

### [Technical Problem of the Invention]

The present invention is directed to providing a battery cell assembly and a battery pack including the same.

### [Technical Solution of the Invention]

To solve the technical problems above, the present invention provides a battery cell assembly according to claim 1 and a battery pack in accordance with claim 8.

According to the present disclosure, a battery cell assembly includes: a cell block including a plurality of battery cells; a bus bar connected to an electrode lead of the cell block; a bus bar frame on which the bus bar is mounted, the bus bar frame including an accommodation space to accommodate a part of the bus bar; and a thermally conductive filler that at least partially fills the accommodation space of the bus bar frame and is in contact with the bus bar.

According to the present disclosure, the battery cell assembly further includes a cooling plate that is provided on the cell block and is in contact with the thermally conductive filler.

In example embodiments, the bus bar frame may include a slit in a lower side of the accommodation space and an opening in an upper side of the accommodation space, the bus bar may be inserted into the accommodation space of the bus bar frame through the slit of the bus bar frame, and a first part of the cooling plate may be inserted into the accommodation space of the bus bar frame through the opening of the bus bar frame.

In example embodiments, at least a portion of the first part of the cooling plate may be buried in the thermally conductive filler.

In example embodiments, the cooling plate is coupled to an upper surface of the cell block, and the bus bar frame may be coupled to one side of the cell block.

In example embodiments, the battery cell assembly may further include another bus bar connected to a different electrode lead of the cell block, and the thermally conductive filler may be in contact with the other bus bar.

In example embodiments, the thermally conductive filler may include a first material layer containing silicone, and a second material layer stacked on the first material layer and containing a thermally conductive resin.

In example embodiments, the bus bar may be an inter-bus bar configured to connect different electrode leads of the cell block or a terminal bus bar electrically connected to an external electrical device.

The present disclosure further provides a battery pack including a pack housing, and a plurality of battery cell assemblies mounted in the pack housing and arranged in a first direction, in which each of the plurality of battery cell assemblies includes: a cell block including a plurality of battery cells; a cooling plate on the cell block; a plurality of bus bars connected to different electrode leads of the cell block; a bus bar frame including a lower part configured to mount the plurality of bus bars thereon, and an upper part with an accommodation space to accommodate a part of each of the plurality of bus bars and a first part of the cooling plate; and a thermally conductive filler at least partially filling the accommodation space of the bus bar frame, the thermally conductive filler being in contact with the plurality of bus bars and the cooling plate to thermally couple the plurality of bus bars to the cooling plate.

In example embodiments, the bus bar frame may include a plurality of slits in a lower side of the accommodation space and an opening in an upper side of the accommodation space, each of the plurality of bus bars may be inserted into the accommodation space of the bus bar frame through a corresponding slit among the plurality of slits, and the first part of the cooling plate may be inserted into the accommodation space of the bus bar frame through the opening of the bus bar frame.

In example embodiments, the plurality of bus bars may be arranged in a first direction, and the first part of the cooling plate may continuously extend in the first direction and be in continuous contact with the thermally conductive filler.

According to the disclosure, the cooling plate is coupled to an upper surface of the cell block, and the bus bar frame may be coupled to one side of the cell block.

In example embodiments, the battery pack may further include a lower housing configured to accommodate the plurality of battery cell assemblies, and a top plate coupled to the lower housing to cover the plurality of battery cell assemblies, and the plurality of battery cell assemblies may be supported by hanging from the top plate.

In example embodiments, the plurality of battery cell assemblies may be spaced apart from a bottom wall of the lower housing, and there may be a space between each of the plurality of battery cell assemblies and the bottom wall of the lower housing.

In example embodiments, each of the plurality of battery cell assemblies may include a cell block in which pouch type battery cells are stacked.

### [Advantageous Effects of the Invention]

According to the present invention, bus bars are thermally coupled to a cooling plate through a thermally conductive filler, thereby improving cooling efficiency of the bus bars. Accordingly, thermal damage to the bus bars can be prevented and the reliability of battery cell assembly can be improved.

Effects achievable from example embodiments of the present disclosure are not limited to the above-described effects, and other effects that are not described herein will be clearly derived and understood by those of ordinary skilled in the art.

### [Brief Description of the Drawings]

FIG. 1 is a perspective view of a battery cell assembly according to example embodiments of the present invention.
FIG. 2 is a side view of some components of a battery cell assembly according to example embodiments of the present invention.
FIG. 3 is a cross-sectional view of some components of a battery cell assembly according to example embodiments of the present invention.
FIG. 4 is a plan view of some components of a battery cell assembly according to example embodiments of the present invention.
FIG. 5 is a cross-sectional view of a part of a battery cell assembly according to example embodiments of the present invention.
FIG. 6 is a cross-sectional view of a battery pack according to embodiments of the present invention.
FIG. 7 is a schematic view of an electric vehicle in which a battery pack according to example embodiments of the present invention is mounted.

### [Exemplary Embodiments of the Invention]

Hereinafter, embodiments of the present disclosure will be described in detail with reference to the accompanying drawings.

Therefore, embodiments set forth herein and configurations illustrated in the drawings are only examples of the present disclosure.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

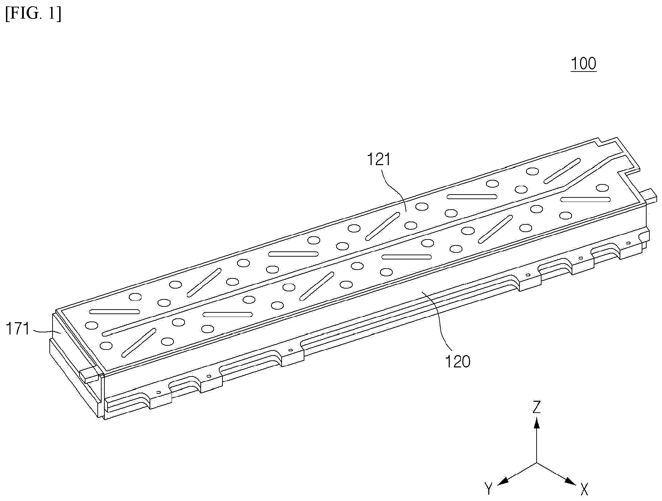

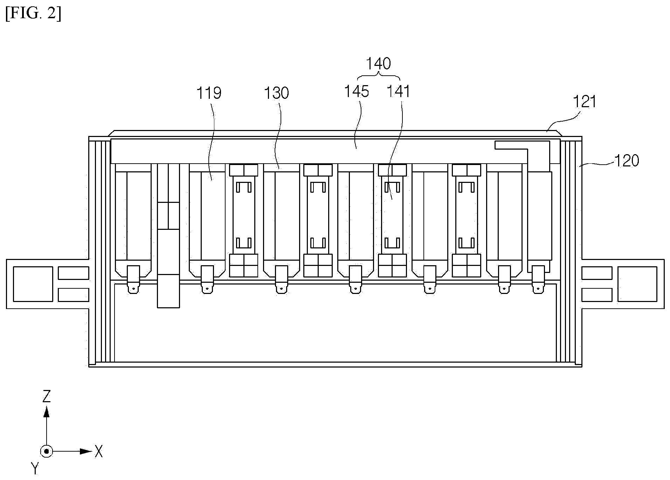

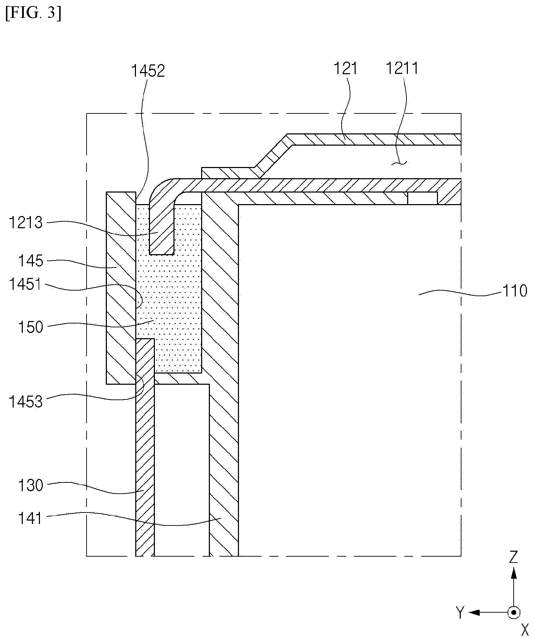

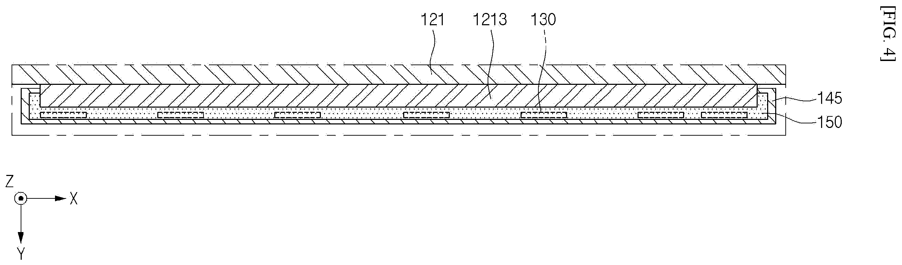

FIGS. 1 to 4 are diagrams illustrating a battery cell assembly 100 according to example embodiments of the present disclosure. FIG. 1 is a perspective view of the battery cell assembly 100. FIG. 2 is a side view of some components of the battery cell assembly 100. FIG. 3 is a cross-sectional view of some components of the battery cell assembly 100. FIG. 4 is a plan view of some components of the battery cell assembly 100.

Referring to FIGS. 1 to 4, the battery cell assembly 100 includes a cell block 110, a case 120 with a cooling plate 121, a bus bar 130, a bus bar frame 140, and a thermally conductive filler 150.

The cell block 110 includes a plurality of battery cells 111. Each of the battery cells 111 is a basic unit of a lithium ion battery, i.e., a secondary battery. Each of the battery cells 111 may include an electrode assembly, an electrolyte, and a case. The electrode assembly included in the case may include a positive electrode, a negative electrode, and a separator interposed between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator interposed therebetween are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 111 may be connected in series and/or in parallel. For example, the plurality of battery cells 111 may be connected to each other in series. For example, the plurality of battery cells 111 may be connected to each other in parallel. For example, when a set of two or more battery cells 111 connected in parallel is defined as a bank, one bank including two or more battery cells 111 connected in parallel and another bank including two or more battery cells 111 connected in parallel may be connected in series.

Each of the battery cells 111 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can. In example embodiments, the battery cell assembly 100 may be a battery module with a module case surrounding upper, lower, left, and right surfaces of the cell block 110 or a device with the module case that is partially or entirely removed.

In example embodiments, the battery cells 111 may pouch type battery cells and be stacked together in one battery cell assembly 100 in a first direction (an X-axis direction). In example embodiments, in each battery cell assembly 100, the plurality of battery cells 111 may be pouch type battery cells whose length in the first direction (the X-axis direction) is less than a length thereof in a second direction (a Y-axis direction) and be stacked in the first direction (the X-axis direction).

In example embodiments, each battery cell assembly 100 may include a single cell block 110. However, the present disclosure is not limited thereto, and each battery cell assembly 100 may include a plurality of sub-cell blocks arranged in the second direction (the Y-axis direction), and each of the sub-cell blocks may include a plurality of battery cells 111 stacked in the first direction (the X-axis direction). For example, each battery cell assembly 100 may include two sub-cell blocks 110 arranged in the second direction (the Y-axis direction).

When viewed in a plan view, the cell block 110 may have a rectangular shape. In this case, the cell block 110 may have a first side surface and a second side surface that face each other in the first direction (the X-axis direction), a front surface and a rear surface that face each other in the second direction (the Y-axis direction), and an upper surface and a lower surface that face each other in a third direction (a Z-axis direction).

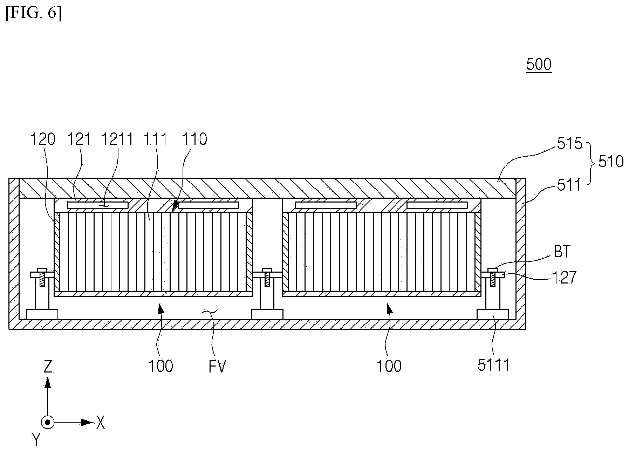

Each of bus bar frames 140 may be disposed on one of the front surface and the rear surface of the cell block 110. A plurality of bus bars 130 may be mounted on the bus bar frame 140 on the front surface of the cell block 110, and a plurality of bus bars 130 may be mounted on the bus bar frame 140 on the rear surface of the cell block 110. The bus bar frames 140 may support electrode leads 119 of the cell block 110. The electrode leads 119 may include a positive electrode lead and a negative electrode lead of each of a plurality of battery cells 111 (see FIG. 6). The battery cell assembly 100 may include end plates 171 to cover the bus bar frame 140 on the front surface of the cell block 110 and the bus bar frame 140 on the rear surface of the cell block 110.

The bus bar frame 140 may include an insulating material. The bus bar frame 140 may include foamable fire-resistant paint. Here, the foamable fire-resistant paint may include a dry coating layer that foams when exposed to heat. When the dry coating layer foams, an insulating layer (e.g., a carbonized layer) whose volume is several tens of times that of the dry coating layer. The insulating layer may delay the transfer of heat to an object to be protected (e.g., the plurality of battery cells 111) for a certain period of time.

The bus bar 130 is coupled to the electrode lead 119 of the battery cell 111. For example, the bus bar 130 may be coupled to the electrode lead 119 of the battery cell 111 by welding. For example, each bus bar 130 may be an inter-bus bar coupled to electrode leads 119 coupled to different battery cells 111 belonging to the cell block 110 to electrically connect the different battery cells 111. For example, each bus bar 130 may be a terminal-bus bar for electrically connecting the battery cell assembly 100 to an external electrical device.

The case 120 accommodates the cell block 110. For example, the case 120 may surround the first side surface, the second side surface, and the upper surface of the cell block 110. For example, the case 120 may include side walls to cover the first and second side surfaces of the cell block 110, and an upper wall to cover the upper surface of the cell block 110. The case 120 may be coupled to the bus bar frames 140 on the front and rear surfaces of the cell block 110.

The case 120 may include a cooling plate 121 forming the upper wall of the cell block 110. The cooling plate 121 is attached to the upper surface of the cell block 110 and thermally coupled to the cell block 110. For example, the cooling plate 121 may be attached to the upper surface of the cell block 110 through a thermal interface material (TIM) layer. The cooling plate 121 may include a cooling channel 1211 configured to allow a cooling fluid to flow therethrough. The cooling fluid provided from the outside of the battery cell assembly 100 may flow into the cooling channel 1211 through an inlet of the cooling channel 1211, flow along the cooling channel 1211, and thereafter flow out through an outlet of the cooling channel 1211. While the first cooling fluid flows along the cooling channel 1211, the battery cell assembly 100 may be cooled. For example, the cooling plate 121 may be manufactured by bonding two plates, and the cooling channel 1211 may include a space defined between the two plates.

Meanwhile, the bus bar frame 140 may include a lower part 141 on which the bus bars 130 are mounted, and an upper part 145 with an accommodation space 1451 in which a part of each of the bus bars 130 is accommodated. In the bus bar frame 140, the upper part 145 of the bus bar frame 140 may be closer to the cooling plate 121 than the lower part 141. The upper part 145 of the bus bar frame 140 may be integrally formed with the lower part 141 of the bus bar frame 140.

Slits 1453 may be provided in a lower side of the accommodation space 1451 of the bus bar frame 140, and an opening 1452 may be provided in an upper side of the accommodation space 1451 of the bus bar frame 140. The accommodation space 1451 of the bus bar frame 140 may communicate with the slits 1453 and the opening 1452. The slits 1453 of the bus bar frame 140 may each provide a path through which one bus bar 130 passes. When viewed in a plan view, one slit 1453 may have dimensions substantially the same as those of one bus bar 130. Each bus bar 130 is inserted into a slit 1453 corresponding thereto, and an upper part of each bus bar 130 may be accommodated in the accommodation space 1451 of the bus bar frame 140. A first part 1213 of the cooling plate 121 may extend to the inside of the accommodation space 1451 of the bus bar frame 140 through the opening 1452 of the bus bar frame 140. When viewed in a plan view, the bus bars 130 may be arranged in the first direction (the X-axis direction), and the first part 1213 of the cooling plate 121 may linearly and continuously extend in the first direction (X-axis direction). A portion of the first part 1213 of the cooling plate 121 may be buried in the thermally conductive filler 150. The first part 1213 of the cooling plate 121 may be in continuous contact with the thermally conductive filler 150 in the first direction (the X-axis direction).

When viewed from a cross-sectional view, the first part 1213 of the cooling plate 121 may extend obliquely from a part of the cooling plate 121 facing the upper surface of the cell block 110. For example, when viewed from a cross-sectional view, the first part 1213 of the cooling plate 121 may include a part that is bent downward from either the part of the cooling plate 121 facing the upper surface of the cell block 110 or a part of the cooling plate 121 in contact with an uppermost end of the bus bar frame 140.

The thermally conductive filler 150 may be provided in the accommodation space 1451 of the bus bar frame 140. The accommodation space 1451 of the bus bar frame 140 may be at least partially filled with the thermally conductive filler 150. The thermally conductive filler 150 may be thermally conductive but may be electrically non-conductive. For example, the thermally conductive filler 150 may include a thermally conductive resin. The thermally conductive filler 150 may include a single material layer or a plurality of material layers. The thermally conductive filler 150 may be referred to as a thermally conductive material layer.

The thermally conductive filler 150 may be configured to thermally couple the bus bars 130 to the cooling plate 121. The thermally conductive filler 150 may be in contact with the bus bars 130 inserted into the accommodation space 1451 of the bus bar frame 140 through the slits 1453 of the bus bar frame 140, and may also be in contact with the first part 1213 of the cooling plate 121 inserted into the accommodation space 1451 of the bus bar frame 140 through the opening 1452 of the bus bar frame 140. The thermally conductive filler 150 may provide a thermally conductive path for thermally connecting each of the bus bars 130 to the cooling plate 121.

According to example embodiments of the present invention, the bus bars 130 are thermally coupled to the cooling plate 121 through the thermally conductive filler 150, cooling efficiency of the busbars 130 may improve. Accordingly, thermal damage to the bus bars 130 can be prevented and the reliability of the battery cell assembly 100 can be improved.

### (Second Embodiment)

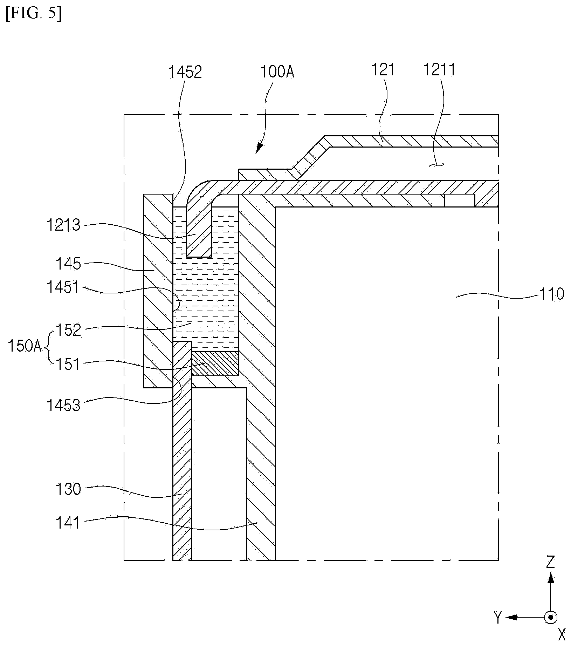

FIG. 5 is a cross-sectional view of a part of a battery cell assembly 100A according to example embodiments of the present disclosure. Hereinafter, the battery cell assembly 100A of FIG. 5 will be described focusing on differences from the battery cell assembly 100 described above with reference to FIGS. 1 to 4.

Referring to FIG. 5, a thermally conductive filler 150A may include a first material layer 151 and a second material layer 152 stacked on the first material layer 151. The first material layer 151 and the second material layer 152 may include different materials. In example embodiments, the first material layer 151 may include silicone and function as a sealing layer for sealing a bottom part of the accommodation space 1451 of the bus bar frame 140. In example embodiments, the second material layer 152 may include a thermally conductive resin and provide a thermally conductive path for thermally coupling each of the bus bars 130 to the cooling plate 121.

### (Third Embodiment)

FIG. 6 is a cross-sectional view of a battery pack 500 according to example embodiments of the present invention. Hereinafter, a description of parts that are the same as those described above will be omitted or simplified.

Referring to FIG. 6, the battery pack 500 includes a pack housing 510 and a plurality of battery cell assemblies 100 mounted in the pack housing 510.

The plurality of battery cell assemblies 100 is mounted in the pack housing 510 to be arranged in the first direction (the X-axis direction). FIG. 6 illustrates that the battery pack 500 includes two battery cell assemblies 100 arranged in the first direction (the X-axis direction) but embodiments are not limited thereto. For example, the battery pack 500 may include three or more battery cell assemblies 100 arranged in the first direction (the X-axis direction).

The pack housing 510 may include a lower housing 511 with an accommodation space for accommodation of the plurality of battery cell assemblies 100, and a top plate 515 coupled on the lower housing 511 to cover the lower housing 511 in which the plurality of battery cell assemblies 100 are accommodated. The accommodation space of the lower housing 511 may be defined by a bottom wall facing a bottom surface of the cell block 110 of each of the battery cell assemblies 100 and side walls on edges of the bottom wall. The top plate 515 is a pack lid configured to cover the plurality of battery cell assemblies 100. When the battery pack 500 is mounted in a vehicle, a cabin room in which a passenger rides may be located above the top plate 515, and a ground on which the vehicle travels may be located below the lower housing 511.

In example embodiments, each of the plurality of battery cell assemblies 100 may be coupled to and supported by a corresponding support block 5111 among support blocks 5111 of the lower housing 511. A fastening part 127 of the case 120 may be provided on one side of each of the battery cell assembly 100, and be fastened to and supported by a corresponding support block 5111 among the support blocks 5111 of the lower housing 511 through a fastening member such as a bolt BT.

In example embodiments, each of the plurality of battery cell assemblies 100 may be supported while being hung from the top plate 515. Each of the battery cell assemblies 100 may be coupled to a lower surface of the top plate 515.

In addition, there may be a free volume FV between the lower surface of each of the battery cell assemblies 100 and the bottom wall of the lower housing 511. The free volume FV may be understood as a space formed as the bottom wall of the lower housing 511 and each of the battery cell assemblies 100 are spaced apart from each other.

The present disclosure provides an inverted support structure in which each of the battery cell assemblies 100 is supported while being hung from the top plate 515. In addition, the free volume FV is provided between the bottom of the battery pack 500 (i.e., the bottom wall of the lower housing 511) and each of the battery cell assemblies 100. A gas and flames generated in a thermal runaway situation may move through the free volume FV. That is, the free volume FV functions as a venting passage through which a high-temperature gas and flames may move.

Even when strong impact is generated due to a foreign material splashing to a lower part of a vehicle when driving on a hard ground such as a non-paved road, the impact may be absorbed through the free volume FV. Therefore, the plurality of battery cell assemblies 100 may be prevented from being damaged due to the impact. The free volume FV is an empty space between each of the plurality of battery cell assemblies 100 and the lower housing 511, and may be used as a space for allowing a certain degree of free deformation of the lower housing 511 when the lower housing 511 is deformed toward each of the battery cell assemblies 100 due to impact applied to a lower part of a vehicle. No structures may be installed in the free volume FV. Alternatively, a structure supporting the battery cell assemblies 100 and the like may be partially installed in the free volume FV. When a structure is installed in the free volume FV, a space sufficient to allow deformation of the lower housing 511 should be provided between each of the battery cell assemblies 100 and the lower housing 511.

A height of the free volume FV and a distance between the bottom wall of the lower housing 511 and each of the battery cell assemblies 100 may be determined to be sufficient to absorb external impact. The height of the free volume FV may be determined in consideration of dimensions and rigidity of the frames of the vehicle, dimensions and rigidity of the lower housing 511, dimensions of the battery pack 500, the amount of a generated gas and a gas discharge rate during thermal runaway, and the like. For example, when the thickness or rigidity of the frames of the vehicle or the bottom wall of the lower housing 511 is relatively large, at least one of the size and height of the free volume FV may be relatively reduced. When the thickness or rigidity of the frames of the vehicle or the bottom wall of the lower housing 511 is relatively small, the bottom wall of the lower housing 511 is highly likely to deform and thus at least one of the size and height of the free volume FV may be relatively increased to protect the battery cell assembly 100. When the size of the battery pack 500 is relatively large compared to the standards of the battery pack 500, a relatively large free volume FV can be secured. When the size of the battery pack 500 is relatively small, a height of the free volume FV to be secured may be relatively small and thus the thickness and rigidity of the bottom wall of the lower housing 511 may have to be relatively increased. When the height of the free volume FV is extremely small, a gas discharge passage may be small and thus internal pressure of the battery pack 500 may increase sharply during thermal runaway. Accordingly, the size and height of the free volume FV may be determined in consideration of the amount of the generated gas and the gas discharge rate.

A maximum height of the free volume FV may be determined according to a degree of damage to the battery cells 111 included in the battery cell assembly 100. For example, when a damage tolerance limit of the battery cell 111 is 1 mm, the free volume FV may be determined to prevent the battery cell 111 from deforming by more than 1 mm when the lower housing 511 deforms and pressurizes a lower surface of the battery cell 111. In this case, the amount of deformation of the lower housing 511 may vary according to the thickness or rigidity of the lower housing 511. Therefore, the size or height of the free volume FV may be determined in consideration of all the damage tolerance limit of the battery cell 111 and the thickness and rigidity of the lower housing 511.

The upper surface of each of the battery cell assemblies 100 may be closely coupled to the lower surface of the top plate 515. When there is a space between the battery cell assembly 100 and the top plate 515, a high-temperature gas may flow into the space between the battery cell assembly 100 and the top plate 515 during thermal runaway and thus heat and flames may propagate to adjacent battery cell assemblies 100. The heat and the flames may also be transferred to the top plate 515 and thus may affect the cabin room above the top plate 515. Therefore, by closely combining the upper surface of each of the battery cell assemblies 100 and the lower surface of the top plate 515, a gas or flames generated in the battery pack 500 may be guided to flow into the free volume FV.

### (Fourth Embodiment)

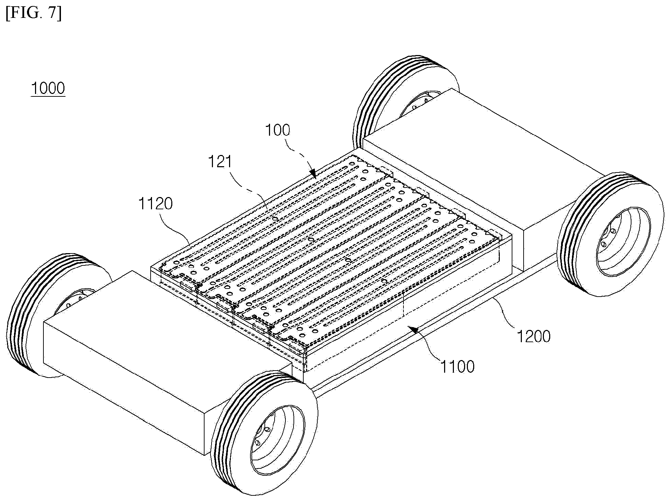

FIG. 7 is a schematic view of an electric vehicle 1000 in which a battery pack 1100 according to example embodiments of the present disclosure is mounted.

For the sake of simplicity, FIG. 7 illustrates only a vehicle body frame 1200 forming a lower frame of the electric vehicle 1000, and the battery pack 1100 and tires that are coupled to the vehicle body frame 1200. The battery pack 1100 may include, for example, the battery pack 500 described above with reference to FIG. 6.

In the case of a general battery pack, battery cell assemblies are installed at the bottom of a housing of the battery pack. However, in the present embodiments, battery cell assemblies 100 of the battery pack 1100 are configured to be supported while being hung from a top plate 1120 of a housing. That is, due to no space between the battery cell assembly 100 and the top plate 1120, a gas generated from the battery cell assembly 100 may be prevented from being transferred to a cabin room corresponding to an upper part of the electric vehicle 1000. The gas may be guided to flow into the free volume FV between the battery cell assembly 100 and a lower side of the housing of the battery pack 1100. The gas may flow through the free volume FV to be discharged to a lower side of the electric vehicle 1000 through a gas exhaust installed in the battery pack 1100. In addition, according to the present embodiments, in the battery pack 1100, the free volume FV is provided between the battery cell assembly 100 and the housing and thus the battery cell assembly 100 can be prevented from being damaged regardless of the deformation of the housing.

According to embodiments of the present disclosure, the battery pack 1100 and the electric vehicle 1000 including the same are capable of increasing the safety of passengers. In addition, the battery cell assembly 100 that is a key component can be protected and the durabilities of the battery pack 1100 and the electric vehicle 1000 can be enhanced.

## Claims

1. A battery cell assembly (100) comprising:
a cell block (110) including a plurality of battery cells (111);
a bus bar (130) connected to an electrode lead (119) of the cell block (110);
a bus bar frame (140) on which the bus bar (130) is mounted, the bus bar frame (140) including an accommodation space (1451) to accommodate a part of the bus bar (130);
a thermally conductive filler (150) at least partially filling the accommodation space (1451) of the bus bar frame (140), the thermally conductive filler (150) being in contact with the bus bar (130); and
a case (120) accommodating the cell block (110) and including a cooling plate (121)
wherein the cooling plate (121) is attached to an upper surface of the cell block (110), thermally coupled to the cell block (110), and in contact with the thermally conductive filler (150).

2. The battery cell assembly (100) of claim 1, wherein
the bus bar frame (140) includes a slit (1453) in a lower side of the accommodation space (1451) and an opening (1452) in an upper side of the accommodation space (1451),
the bus bar (130) is inserted into the accommodation space (1451) of the bus bar frame through the slit (1453) of the bus bar frame (140), and
the first part (1213) of the cooling plate (121) is inserted into the accommodation space (1451) of the bus bar frame (140) through the opening (1452) of the bus bar frame (140).

3. The battery cell assembly of claim 2, wherein
at least a portion of the first part (1213) of the cooling plate (121) is buried in the thermally conductive filler (150).

4. The battery cell assembly (100) of claim 1, wherein
the bus bar frame (140) is coupled to one side of the cell block (110).

5. The battery cell assembly (100) of claim 1, further comprising
another bus bar (130) connected to a different electrode lead (119) of the cell block (110),
wherein the thermally conductive filler (150) is in contact with the another bus bar (130).

6. The battery cell assembly (100) of claim 1, wherein
the thermally conductive filler (150) comprises:
a first material layer (151) containing silicone; and
a second material layer (152) stacked on the first material layer (151), and containing a thermally conductive resin.

7. The battery cell assembly (100) of claim 1, wherein
the bus bar (130) comprises an inter-bus bar configured to connect different electrode leads (119) of the cell block (110) or a terminal bus bar electrically connected to an external electrical device.

8. A battery pack (500) comprising:
a pack housing (510); and
a plurality of battery cell assemblies (100) mounted in the pack housing (510) and arranged in a first direction,
wherein each of the plurality of battery cell assemblies (100) comprises:
a cell block (110) including a plurality of battery cells (111);
a case (120) accommodating the cell block (110) and including a cooling plate (121);
a plurality of bus bars (130) connected to different electrode leads (119) of the cell block (110);
a bus bar frame (140) including a lower part (141) configured to mount the plurality of bus bars (130) thereon, and an upper part (145) with an accommodation space (1451) to accommodate a part of each of the plurality of bus bars (130) and a first part (1213) of the cooling plate (121); and
a thermally conductive filler (150) at least partially filling the accommodation space (1451) of the bus bar frame (140), the thermally conductive filler (150) being in contact with the plurality of bus bars (130) and the cooling plate (121) to thermally couple the plurality of bus bars (130) to the cooling plate (121),
wherein the cooling plate (121) is attached to an upper surface of the cell block (110), thermally coupled to the cell block (110), and is in contact with the thermally conductive filler (150).

9. The battery pack (500) of claim 8, wherein
the bus bar frame (140) includes a plurality of slits (1453) in a lower side of the accommodation space (1451) and an opening (1452) in an upper side of the accommodation space (1451),
each of the plurality of bus bars (130) is inserted into the accommodation space (1451) of the bus bar frame (140) through a corresponding slit among the plurality of slits (1453), and
the first part (1213) of the cooling plate (121) is inserted into the accommodation space (1451) of the bus bar frame (140) through the opening (1452) of the bus bar frame (140).

10. The battery pack (500) of claim 8, wherein
the plurality of bus bars (130) are arranged in a first direction, and
the first part (1213) of the cooling plate (121) continuously extends in the first direction and is in continuous contact with the thermally conductive filler (150).

11. The battery pack (500) of claim 8, wherein
the bus bar frame (140) is coupled to one side of the cell block (110).

12. The battery pack (500) of claim 8, further comprising:
a lower housing (511) configured to accommodate the plurality of battery cell assemblies (100); and
a top plate (515) coupled to the lower housing (511) to cover the plurality of battery cell assemblies (100),
wherein the plurality of battery cell assemblies (100) are supported by hanging from the top plate (515).

13. The battery pack (500) of claim 12, wherein
the plurality of battery cell assemblies (100) are spaced apart from a bottom wall of the lower housing (511), and a space is formed between each of the plurality of battery cell assemblies (100) and the bottom wall of the lower housing (511).

14. The battery pack (500) of claim 8, wherein each of the plurality of battery cell assemblies (100) comprises a cell block (110) in which pouch type battery cells (111) are stacked.

## Patentansprüche

1. Batteriezellenanordnung (100), umfassend:
einen Zellblock (110), der eine Mehrzahl von Batteriezellen (111) aufweist;
eine Sammelschiene (130), die mit einer Elektrodenleitung (119) des Zellblocks (110) verbunden ist;
einen Sammelschienenrahmen (140), auf dem die Sammelschiene (130) montiert ist, wobei der Sammelschienenrahmen (140) einen Aufnahmeraum (1451) zur Aufnahme eines Teils der Sammelschiene (130) aufweist;
ein wärmeleitendes Füllmaterial (150), das den Aufnahmeraum (1451) des Sammelschienenrahmens (140) zumindest teilweise ausfüllt, wobei das wärmeleitende Füllmaterial (150) mit der Sammelschiene (130) in Kontakt steht; und
ein Gehäuse (120), das den Zellblock (110) aufnimmt und eine Kühlplatte (121) aufweist,
wobei die Kühlplatte (121) an einer oberen Oberfläche des Zellblocks (110) befestigt ist, mit dem Zellblock (110) thermisch gekoppelt ist und mit dem wärmeleitenden Füllmaterial (150) in Kontakt steht.

2. Batteriezellenanordnung (100) nach Anspruch 1, wobei
der Sammelschienenrahmen (140) einen Schlitz (1453) in einer Unterseite des Aufnahmeraums (1451) und eine Öffnung (1452) in einer Oberseite des Aufnahmeraums (1451) aufweist,
die Sammelschiene (130) in den Aufnahmeraum (1451) des Sammelschienenrahmens durch den Schlitz (1453) des Sammelschienenrahmens (140) eingesetzt ist und
der erste Teil (1213) der Kühlplatte (121) in den Aufnahmeraum (1451) des Sammelschienenrahmens (140) durch die Öffnung (1452) des Sammelschienenrahmens (140) eingesetzt ist.

3. Batteriezellenanordnung nach Anspruch 2, wobei
zumindest ein Abschnitt des ersten Teils (1213) der Kühlplatte (121) in das wärmeleitende Füllmaterial (150) eingebettet ist.

4. Batteriezellenanordnung (100) nach Anspruch 1, wobei
der Sammelschienenrahmen (140) mit einer Seite des Zellblocks (110) gekoppelt ist.

5. Batteriezellenanordnung (100) nach Anspruch 1, ferner umfassend
eine weitere Sammelschiene (130), die mit einer anderen Elektrodenleitung (119) des Zellblocks (110) verbunden ist,
wobei das wärmeleitende Füllmaterial (150) mit der weiteren Sammelschiene (130) in Kontakt steht.

6. Batteriezellenanordnung (100) nach Anspruch 1, wobei
das wärmeleitende Füllmaterial (150) umfasst:
eine erste Materialschicht (151), die Silikon enthält; und
eine zweite Materialschicht (152), die auf der ersten Materialschicht (151) gestapelt ist und ein wärmeleitendes Harz enthält.

7. Batteriezellenanordnung (100) nach Anspruch 1, wobei
die Sammelschiene (130) eine Zwischensammelschiene, die dazu eingerichtet ist, unterschiedliche Elektrodenleitungen (119) des Zellblocks (110) zu verbinden, oder eine Anschlusssammelschiene, die mit einer externen elektrischen Vorrichtung elektrisch verbunden ist, umfasst.

8. Batteriepack (500), umfassend:
ein Packgehäuse (510); und
eine Mehrzahl von Batteriezellenanordnungen (100), die in dem Packgehäuse (510) montiert und in einer ersten Richtung angeordnet sind,
wobei jede der Mehrzahl von Batteriezellenanordnungen (100) umfasst:
einen Zellblock (110), der eine Mehrzahl von Batteriezellen (111) aufweist;
ein Gehäuse (120), das den Zellblock (110) aufnimmt und eine Kühlplatte (121) aufweist;
eine Mehrzahl von Sammelschienen (130), die mit unterschiedlichen Elektrodenleitungen (119) des Zellblocks (110) verbunden sind;
einen Sammelschienenrahmen (140), der einen unteren Teil (141), der zur Montage der Mehrzahl von Sammelschienen (130) darauf eingerichtet ist, und einen oberen Teil (145) mit einem Aufnahmeraum (1451) zur Aufnahme eines Teils jeder der Mehrzahl von Sammelschienen (130) und eines ersten Teils (1213) der Kühlplatte (121) aufweist; und
ein wärmeleitendes Füllmaterial (150), das den Aufnahmeraum (1451) des Sammelschienenrahmens (140) zumindest teilweise ausfüllt, wobei das wärmeleitende Füllmaterial (150) mit der Mehrzahl von Sammelschienen (130) und der Kühlplatte (121) in Kontakt steht, um die Mehrzahl von Sammelschienen (130) mit der Kühlplatte (121) thermisch zu koppeln,
wobei die Kühlplatte (121) an einer oberen Oberfläche des Zellblocks (110) befestigt ist, mit dem Zellblock (110) thermisch gekoppelt ist und mit dem wärmeleitenden Füllmaterial (150) in Kontakt steht.

9. Batteriepack (500) nach Anspruch 8, wobei
der Sammelschienenrahmen (140) eine Mehrzahl von Schlitzen (1453) in einer Unterseite des Aufnahmeraums (1451) und eine Öffnung (1452) in einer Oberseite des Aufnahmeraums (1451) aufweist,
jede der Mehrzahl von Sammelschienen (130) in den Aufnahmeraum (1451) des Sammelschienenrahmens (140) durch einen entsprechenden Schlitz aus der Mehrzahl von Schlitzen (1453) eingesetzt ist, und
der erste Teil (1213) der Kühlplatte (121) in den Aufnahmeraum (1451) des Sammelschienenrahmens (140) durch die Öffnung (1452) des Sammelschienenrahmens (140) eingesetzt ist.

10. Batteriepack (500) nach Anspruch 8, wobei
die Mehrzahl von Sammelschienen (130) in einer ersten Richtung angeordnet ist, und
der erste Teil (1213) der Kühlplatte (121) sich durchgehend in der ersten Richtung erstreckt und in durchgehendem Kontakt mit dem wärmeleitenden Füllmaterial (150) steht.

11. Batteriepack (500) nach Anspruch 8, wobei
der Sammelschienenrahmen (140) mit einer Seite des Zellblocks (110) gekoppelt ist.

12. Batteriepack (500) nach Anspruch 8, ferner umfassend:
ein unteres Gehäuse (511), das dazu eingerichtet ist, die Mehrzahl von Batteriezellenanordnungen (100) aufzunehmen; und
eine Deckplatte (515), die mit dem unteren Gehäuse (511) gekoppelt ist, um die Mehrzahl von Batteriezellenanordnungen (100) abzudecken,
wobei die Mehrzahl von Batteriezellenanordnungen (100) an der Deckplatte (515) hängend getragen wird.

13. Batteriepack (500) nach Anspruch 12, wobei
die Mehrzahl von Batteriezellenanordnungen (100) von einer Bodenwand des unteren Gehäuses (511) beabstandet ist und zwischen jeder der Mehrzahl von Batteriezellenanordnungen (100) und der Bodenwand des unteren Gehäuses (511) ein Raum gebildet ist.

14. Batteriepack (500) nach Anspruch 8, wobei jede der Mehrzahl von Batteriezellenanordnungen (100) einen Zellblock (110) umfasst, in dem Batteriezellen vom Pouch-Typ (111) gestapelt sind.

## Revendications

1. Ensemble de cellules de batterie (100), comprenant :
un bloc de cellules (110) comprenant une pluralité de cellules de batterie (111) ;
une barre omnibus (130) connectée à un conducteur d'électrode (119) du bloc de cellules (110) ;
un cadre de barre omnibus (140) sur lequel la barre omnibus (130) est montée, ledit cadre de barre omnibus (140) comprenant un espace de réception (1451) pour loger une partie de la barre omnibus (130) ;
une charge thermoconductrice (150) comblant au moins partiellement l'espace de réception (1451) du cadre de barre omnibus (140), ladite charge thermoconductrice (150) étant en contact avec la barre omnibus (130) ; et
un boîtier (120) recevant le bloc de cellules (110) et comportant une plaque de refroidissement (121) ;
la plaque de refroidissement (121) étant fixée à une surface supérieure du bloc de cellules (110), raccordée thermiquement au bloc de cellules (110) et en contact avec la charge thermoconductrice (150).

2. Ensemble de cellules de batterie (100) selon la revendication 1, où
le cadre de barre omnibus (140) présente une fente (1453) dans un côté inférieur de l'espace de réception (1451) et une ouverture (1452) dans un côté supérieur de l'espace de réception (1451),
la barre omnibus (130) est insérée dans l'espace de réception (1451) du cadre de barre omnibus par la fente (1453) du cadre de barre omnibus (140), et
la première partie (1213) de la plaque de refroidissement (121) est insérée dans l'espace de réception (1451) du cadre de barre omnibus (140) par l'ouverture (1452) du cadre de barre omnibus (140).

3. Ensemble de cellules de batterie selon la revendication 2, où
au moins une partie de la première partie (1213) de la plaque de refroidissement (121) est incorporée dans la charge thermoconductrice (150).

4. Ensemble de cellules de batterie (100) selon la revendication 1, où
le cadre de barre omnibus (140) est raccordé à un côté du bloc de cellules (110).

5. Ensemble de cellules de batterie (100) selon la revendication 1, comprenant en outre une autre barre omnibus (130) connectée à un conducteur d'électrode différent (119) du bloc de cellules (110),
la charge thermoconductrice (150) étant en contact avec l'autre barre omnibus (130).

6. Ensemble de cellules de batterie (100) selon la revendication 1, où la charge thermoconductrice (150) comprend :
une première couche de matériau (151) contenant du silicone ; et
une deuxième couche de matériau (152) superposée à la première couche de matériau (151) et contenant une résine thermoconductrice.

7. Ensemble de cellules de batterie (100) selon la revendication 1, où
la barre omnibus (130) comprend une barre interbus prévue pour connecter différents conducteurs d'électrode (119) du bloc de cellules (110) ou une barre omnibus de borne connectée électriquement à un dispositif électrique externe.

8. Batterie (500), comprenant :
un boîtier de bloc (510) ; et
une pluralité d'ensembles de cellules de batterie (100) montés dans le boîtier de bloc (510) et disposés dans une première direction,
où chaque ensemble de la pluralité d'ensembles de cellules de batterie (100) comprend :
un bloc de cellules (110) comprenant une pluralité de cellules de batterie (111) ;
un boîtier (120) recevant le bloc de cellules (110) et comprenant une plaque de refroidissement (12) ;
une pluralité de barres omnibus (130) connectées à différents fils d'électrodes (119) du bloc de cellules (110) ;
un cadre de barres omnibus (140) comprenant une partie inférieure (141) prévue pour monter la pluralité de barres omnibus (130) sur celle-ci, et une partie supérieure (145) avec un espace de réception (1451) pour loger une partie de chaque barre de la pluralité de barres omnibus (130) et une première partie (1213) de la plaque de refroidissement (121) ; et
une charge thermoconductrice (150) comblant au moins partiellement l'espace de réception (1451) du cadre de barres omnibus (140), ladite charge thermoconductrice (150) étant en contact avec la pluralité de barres omnibus (130) et la plaque de refroidissement (121) pour raccorder thermiquement la pluralité de barres omnibus (130) à la plaque de refroidissement (121),
où la plaque de refroidissement (121) est fixée à une surface supérieure du bloc de cellules (110), raccordée thermiquement au bloc de cellules (110) et en contact avec la charge thermoconductrice (150).

9. Batterie (500) selon la revendication 8, où
le cadre de barres omnibus (140) comprend une pluralité de fentes (1453) dans un côté inférieur de l'espace de réception (1451) et une ouverture (1452) dans un côté supérieur de l'espace de réception (1451),
chaque barre de la pluralité de barres omnibus (130) est insérée dans l'espace de réception (1451) du cadre de barres omnibus (140) par une fente correspondante parmi la pluralité de fentes (1453), et
la première partie (1213) de la plaque de refroidissement (121) est insérée dans l'espace de réception (1451) du cadre de barres omnibus (140) par l'ouverture (1452) du cadre de barres omnibus (140).

10. Batterie (500) selon la revendication 8, où
la pluralité de barres omnibus (130) est disposée dans une première direction, et
la première partie (1213) de la plaque de refroidissement (121) s'étend de manière continue dans la première direction et est en contact continu avec la charge thermoconductrice (150).

11. Batterie (500) selon la revendication 8, où
le cadre de barres omnibus (140) est raccordé à un côté du bloc de cellules (110).

12. Batterie (500) selon la revendication 8, comprenant en outre :
un boîtier inférieur (511) prévu pour recevoir la pluralité d'ensembles de cellules de batterie (100) ; et
une plaque supérieure (515) raccordée au boîtier inférieur (511) de manière à recouvrir la pluralité d'ensembles de cellules de batterie (100),
où la pluralité d'ensembles de cellules de batterie (100) est supportée par accrochage à la plaque supérieure (515).

13. Batterie (500) selon la revendication 12, où
la pluralité d'ensembles de cellules de batterie (100) est espacée d'une paroi inférieure du boîtier inférieur (511), et un espace est formé entre chaque ensemble de la pluralité d'ensembles de cellules de batterie (100) et la paroi inférieure du boîtier inférieur (511).

14. Batterie (500) selon la revendication 8, où chaque ensemble de la pluralité d'ensembles de cellules de batterie (100) comprend un bloc de cellules (110) où sont empilées des cellules de batterie en forme de poche (111).
